# DEMANDE DE BREVET EUROPEEN

(11) **EP 3 336 982 A1**
(43) Date de publication de la demande: **20.06.2018**
(21) Numéro de dépôt: 17306650.7
(22) Date de dépôt: 28.11.2017
(51) Int. Cl.: H02B 1/20

(54) **DISPOSITIF DE DISTRIBUTION D'UN COURANT ELECTRIQUE AU SEIN D'AU MOINS DEUX APPAREILS ELECTRIQUES**

(30) Priorité: 15.12.2016 FR 1662560
(71) Demandeur: Legrand France, 87000 Limoges (FR); Legrand SNC, 87000 Limoges (FR)
(72) Inventeur: BEAUDOU, Alain, 87000 Limoges (FR); LAURENT, Frédéric, 87570 Rilhac Rancon (FR)
(74) Mandataire: Novagraaf Technologies

(57) **Abrégé**

L'invention concerne un dispositif (2) de distribution d'un courant électrique au sein d'au moins deux appareils électriques, par exemple modulaires, lesdits appareils électriques présentant chacun au moins un bornier de connexion d'alimentation définissant un logement de réception d'un conducteur d'alimentation, le dispositif de distribution (2) comprenant :
• un longeron (6) fait d'un matériau conducteur électrique, et apte à être relié à au moins une source d'alimentation en courant électrique ;
• au moins deux dents conductrices (8) faisant saillies depuis le longeron (6), chaque dent conductrice (8) comprenant une portion (34) formant un conducteur d'alimentation, ladite portion (34) étant apte à être reçue au sein d'un desdits logements de réception ;
dans lequel au moins une des dents conductrices (8) est montée mobile par rapport au longeron (6), et est apte à être mise en contact avec le longeron (6) dans au moins une position de la dent.

## Description

### DOMAINE TECHNIQUE DE L'INVENTION

La présente invention concerne de manière générale le domaine des installations électriques. Elle vise en particulier un dispositif de distribution électrique, de type peigne ou barre de distribution, apte à alimenter en courant électrique au moins deux appareils électriques.

De tels appareils électriques sont par exemple des appareils modulaires, typiquement des appareils de protection de type disjoncteurs, fixés de manière accolée sur un organe de fixation de type rail permettant leur disposition en rangée. De tels appareils modulaires sont par exemple agencés dans un tableau, un coffret ou encore une armoire électrique.

### ETAT DE LA TECHNIQUE ANTERIEURE

Il est connu des dispositifs de distribution électrique comprenant un longeron fait d'un matériau conducteur électrique et au moins deux dents conductrices faisant saillies depuis le longeron. Un exemple de dispositif de distribution électrique de ce genre est connu du document FR 2 993 991 B1. Le longeron est relié à une source d'alimentation en courant électrique, et chaque dent conductrice comprend une portion formant un conducteur d'alimentation. Les appareils électriques alimentés par un tel dispositif de distribution présentent chacun un bornier de connexion d'alimentation définissant un logement de réception du conducteur d'alimentation d'une dent conductrice. Un tel dispositif de distribution permet ainsi d'alimenter en courant électrique tout un groupe d'appareils électriques, par exemple un ensemble d'appareils électriques modulaires disposés sur une rangée.

Toutefois, un tel dispositif de distribution électrique ne permet pas de sélectionner, parmi l'ensemble d'appareils électriques initialement alimentés en courant, un sous-ensemble d'appareils électriques que l'on ne souhaite plus alimenter, ou que l'on souhaite alimenter via une autre source d'alimentation en courant électrique reliée au longeron.

### OBJECTIF DE L'INVENTION

L'invention décrite par la suite vise à remédier à tout ou partie des inconvénients de l'état de la technique et vise notamment à proposer un dispositif de distribution d'un courant électrique au sein d'au moins deux appareils électriques tel que décrit ci-dessus, permettant de sélectionner facilement, parmi lesdits appareils électriques, un sous-ensemble d'appareils électriques que l'on ne souhaite pas alimenter, ou que l'on souhaite alimenter via une autre source d'alimentation en courant électrique reliée au longeron.

### RESUME DE L'INVENTION

Cet objectif est atteint grâce à un dispositif de distribution d'un courant électrique au sein d'au moins deux appareils électriques, par exemple modulaires, fixés de manière accolée sur un organe de fixation de type rail permettant leur disposition en rangée, lesdits appareils électriques présentant chacun au moins un bornier de connexion d'alimentation définissant un logement de réception d'un conducteur d'alimentation, le dispositif de distribution comprenant :
- un longeron fait d'un matériau conducteur électrique, et apte à être relié à au moins une source d'alimentation en courant électrique ;
- au moins deux dents conductrices faisant saillies depuis le longeron, chaque dent conductrice comprenant une portion formant un conducteur d'alimentation, ladite portion étant apte à être reçue au sein d'un desdits logements de réception ;
dans lequel au moins une des dents conductrices est montée mobile par rapport au longeron, et est apte à être mise en contact avec le longeron dans au moins une position de la dent.

Ainsi, cette solution permet d'atteindre l'objectif précité. En effet, grâce au fait qu'au moins une des dents conductrices est montée mobile par rapport au longeron, le dispositif de distribution électrique selon l'invention permet avantageusement, via un déplacement de cette dent, de ne plus alimenter l'appareil électrique destiné à recevoir le conducteur d'alimentation de la dent, ou de l'alimenter via une autre source d'alimentation en courant électrique. Il devient ainsi possible, pour une longueur donnée du longeron, de sélectionner facilement, parmi les appareils électriques destinés initialement à recevoir les dents, un sous-ensemble d'appareils électriques que l'on ne souhaite pas alimenter, ou que l'on souhaite alimenter via une autre source d'alimentation en courant électrique reliée au longeron. Cette alimentation sélective des appareils électriques peut être effectuée aisément, sans avoir à démonter l'ensemble du dispositif de distribution préalablement installé au sein des appareils électriques.

Selon une caractéristique technique de l'invention, au moins une des dents conductrices est amovible par rapport au longeron.

Une telle configuration permet avantageusement de pouvoir démonter l'appareil électrique destiné à recevoir le conducteur d'alimentation de la dent amovible, sans avoir à démonter l'ensemble du dispositif de distribution préalablement installé au sein des appareils électriques. Autrement dit, grâce à cette caractéristique, l'appareil électrique destiné à recevoir le conducteur d'alimentation de la dent amovible peut être facilement démonté, en particulier lorsque cet appareil est un appareil modulaire, tout en conservant la configuration d'installation du dispositif de distribution au sein des appareils électriques. En outre, une telle configuration permet si nécessaire de ne plus alimenter l'appareil électrique destiné à recevoir le conducteur d'alimentation de la dent.

Avantageusement, la dent amovible comporte une partie supérieure non conductrice et une partie inférieure conductrice, la partie supérieure non conductrice étant formée d'une tête de réception d'un outil de montage et de démontage, et la partie inférieure conductrice comprenant une première portion apte à être mise en contact avec le longeron, et une deuxième portion destinée à être reçue au sein d'un desdits logements de réception.

Une telle caractéristique permet de faciliter le démontage puis le montage de la dent amovible sur le longeron, via l'utilisation d'un outil adapté.

Selon une caractéristique technique de l'invention, au moins une des dents conductrices est orientable par rapport au longeron, entre ladite position de mise en contact avec le longeron, et au moins une autre position.

Avantageusement, ladite dent conductrice est orientable entre ladite position de mise en contact et au moins une autre position de non-contact avec le longeron. Ceci permet si nécessaire de ne plus alimenter l'appareil électrique destiné à recevoir le conducteur d'alimentation de cette dent.

Avantageusement, le longeron comporte un premier barreau conducteur et un deuxième barreau conducteur, les premier et deuxième barreaux conducteurs s'étendant sensiblement parallèlement ; et ladite dent orientable est montée pivotable entre les premier et deuxième barreaux conducteurs, et est apte à être mise en contact par pivotement avec l'un ou l'autre des premier et deuxième barreaux conducteurs.

Une telle configuration permet de pouvoir modifier sélectivement la source d'alimentation de l'appareil électrique destiné à recevoir le conducteur d'alimentation de la dent orientable, et/ou permet une activation sélective d'une mesure ou d'une non-mesure du courant électrique consommé par cet appareil électrique.

Avantageusement, la dent orientable comporte une partie supérieure non conductrice et une partie inférieure conductrice, la partie supérieure non conductrice étant formée d'une tête de réception d'un outil de pivotement, et la partie inférieure conductrice comprenant une première portion apte à être mise en contact par pivotement avec l'un ou l'autre des premier et deuxième barreaux conducteurs, et une deuxième portion destinée à être reçue au sein d'un desdits logements de réception.

Une telle caractéristique permet de faciliter le pivotement de la dent par rapport au longeron, via l'utilisation d'un outil adapté.

Selon une première variante de réalisation, la partie supérieure non conductrice est munie d'une lumière de passage de la première portion, la première portion présentant une forme sensiblement en « L », une première branche de la première portion s'étendant au sein de la partie supérieure non conductrice, une deuxième branche de la première portion s'étendant à l'écart de la première branche, à travers ladite lumière de passage ; et chacun des premier et deuxième barreaux conducteurs comprend au moins un élément de mise en contact avec ladite deuxième branche de la première portion.

Avantageusement, l'élément de mise en contact est configuré de sorte à verrouiller la dent orientable en position de contact, lorsque la deuxième portion de la partie inférieure conductrice de la dent est reçue au sein d'un des logements de réception.

Cette caractéristique permet d'améliorer la fiabilité du contact électrique entre le longeron et la première portion de la partie inférieure conductrice de la dent orientable.

Avantageusement, l'élément de mise en contact est formé d'une ouverture dans le barreau conducteur, définissant une pente de pression de contact avec la deuxième branche de la première portion de la dent, et d'une enclume de support de ladite deuxième branche, s'étendant à l'écart de l'ouverture.

Ces caractéristiques permettent d'améliorer encore la qualité et la fiabilité du contact électrique entre le longeron et la première portion de la partie inférieure conductrice de la dent orientable.

Selon une deuxième variante de réalisation, la première portion de la partie inférieure conductrice est formée d'une pièce comportant un créneau d'entrainement en rotation et une alvéole de mise en contact électrique avec l'un ou l'autre des premier et deuxième barreaux conducteurs, la deuxième portion de la partie inférieure conductrice étant en contact avec ledit créneau d'entrainement en rotation ; et la tête de réception formant la partie supérieure non conductrice comprend une partie creuse inférieure définissant un logement de réception et de solidarisation audit créneau d'entrainement en rotation.

Avantageusement, la deuxième portion de la partie inférieure conductrice présente une section transversale sensiblement circulaire ou semi-circulaire.

Une telle caractéristique permet avantageusement de pouvoir faire pivoter la dent orientable au sein du logement de réception défini par le bornier de connexion de l'appareil électrique, sans avoir à désinstaller le dispositif de distribution installé au préalable au sein des appareils électriques.

Avantageusement, le premier barreau conducteur est apte à être relié à une première source d'alimentation en courant électrique, et le deuxième barreau conducteur est apte à être relié à une deuxième source d'alimentation en courant électrique, distincte de la première source d'alimentation.

Cette caractéristique permet de pouvoir alimenter sélectivement l'appareil électrique destiné à recevoir le conducteur d'alimentation de la dent orientable, via la première source ou la deuxième source d'alimentation.

Selon un premier mode de réalisation du dispositif, le premier barreau conducteur est muni d'une languette conductrice apte à être insérée dans une borne d'entrée d'un appareil de mesure de courant, par exemple modulaire, fixé sur l'organe de fixation de type rail ; et le deuxième barreau conducteur est muni d'une languette conductrice apte à être insérée dans une borne de sortie dudit appareil de mesure de courant. Un tel appareil de mesure du courant fournit alors au dispositif le courant électrique d'alimentation.

Ces caractéristiques permettent d'adapter facilement l'installation du dispositif de distribution électrique au cas où un appareil de mesure de courant est pré-installé sur le rail, permettant ainsi d'obtenir un système opérationnel de mesure sélective du courant consommé par un sous-ensemble des appareils électriques, choisis parmi les appareils électriques destinés initialement à recevoir les dents.

Selon un deuxième mode de réalisation du dispositif, le longeron comporte en outre une pièce de pontage conductrice, ladite pièce de pontage reliant les premier et deuxième barreaux conducteurs.

Cette caractéristique permet de faciliter l'implantation d'un organe de mesure d'un courant électrique au sein du dispositif de distribution électrique, du type tore de mesure de courant. Ceci permet avantageusement de réduire l'encombrement du dispositif lorsque ce dernier comporte un tel organe de mesure de courant.

Avantageusement, le premier barreau ou le deuxième barreau conducteur est muni d'une languette conductrice apte à être insérée dans une borne d'un appareil électrique, par exemple modulaire, fixé sur l'organe de fixation de type rail, un tel appareil électrique fournissant au dispositif le courant électrique d'alimentation.

Selon une caractéristique technique de l'invention, le dispositif comprend en outre un organe de mesure d'un courant électrique circulant au sein du longeron.

Avantageusement, selon le deuxième mode de réalisation du dispositif, l'organe de mesure d'un courant est un tore de mesure, le tore de mesure de courant étant agencé autour de la pièce de pontage conductrice.

Cette caractéristique permet d'obtenir un système simple et fiable de mesure sélective du courant consommé par un sous-ensemble des appareils électriques, choisis parmi les appareils électriques destinés initialement à recevoir les dents.

Selon une caractéristique technique de l'invention, le dispositif comprend en outre un capot et/ou un socle de protection.

Avantageusement, le capot et/ou le socle de protection comprend des logements de réception, de guidage et de maintien des dents conductrices.

### BREVE DESCRIPTION DES FIGURES

D'autres caractéristiques et avantages innovants de l'invention ressortiront à la lecture de la description ci-après, fournie à titre indicatif et nullement limitatif, en référence aux dessins annexés, dans lesquels :
- la figure 1 illustre en perspective un ensemble comprenant plusieurs appareils électriques modulaires, ainsi qu'un dispositif de distribution d'un courant électrique au sein des appareils selon un premier mode de réalisation de l'invention;
- la figure 2 est une vue en perspective et éclaté de l'ensemble de la figure 1 ;
- les figures 3 et 4 sont des vues en perspective et éclaté du dispositif de distribution électrique de la figure 1 ;
- la figure 5 est une vue de face et en éclaté du dispositif de distribution électrique de la figure 1, le dispositif comprenant un longeron et plusieurs dents conductrices faisant saillie depuis le longeron ;
- la figure 6 est une vue en coupe, prise selon le plan VI-VI, d'une des dents conductrices de la figure 5 ;
- la figure 7 illustre en perspective un ensemble comprenant plusieurs appareils électriques modulaires, ainsi qu'un dispositif de distribution d'un courant électrique au sein des appareils selon un deuxième mode de réalisation de l'invention ;
- la figure 8 est une vue en perspective d'une partie du dispositif de distribution de la figure 7, selon une première variante de réalisation, le dispositif comprenant un longeron ;
- la figure 9 est une vue en perspective du longeron de la figure 8 ;
- les figures 10, 11 et 12 sont respectivement des vues de dessus, en perspective et de face de parties du dispositif de distribution de la figure 8 ;
- la figure 13 une vue en perspective d'une partie du dispositif de distribution de la figure 7, selon une deuxième variante de réalisation ;
- les figures 14 et 15 sont respectivement des vues en perspective et de dessus de parties du dispositif de distribution de la figure 13 ; et
- les figures 16 et 17 sont des vues en perspective d'autres parties du dispositif de distribution de la figure 13.

Pour plus de clarté, les éléments identiques ou similaires sont repérés par des signes de référence identiques sur l'ensemble des figures.

### DESCRIPTION DETAILLEE

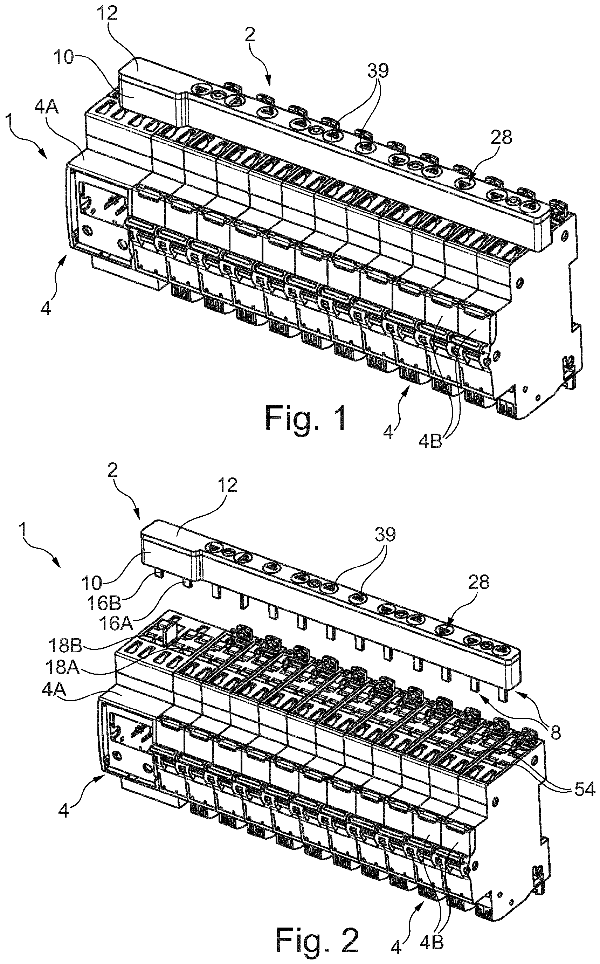

Les figures 1 à 6 représentent tout ou partie d'un ensemble 1 comprenant un dispositif de distribution électrique 2 selon un premier mode de réalisation de l'invention. Sur les figures 1 et 2 est représenté l'ensemble 1, respectivement en perspective et en éclaté.

Outre le dispositif 2, l'ensemble 1 comprend également plusieurs appareils électriques 4, en l'occurrence douze appareils 4 dans l'exemple de réalisation particulier illustré sur les figures 1 et 2. Les appareils électriques 4 sont par exemple des appareils modulaires, fixés de manière accolée sur un organe de fixation de type rail permettant leur disposition en rangée. Un tel rail, non représenté sur les figures pour des raisons de clarté, est par exemple agencé au sein d'un tableau, d'un coffret ou encore d'une armoire électrique, de tels éléments n'étant pas non plus représentés sur les figures. L'ensemble 1 est par exemple destiné à être monté sur le rail, au sein du tableau, du coffret ou encore de l'armoire électrique. L'ensemble 1 est destiné à être alimenté électriquement via un réseau électrique. Plus précisément, le dispositif de distribution électrique 2 est apte à être relié à au moins une source d'alimentation en courant électrique, et à alimenter les appareils 4 en courant électrique.

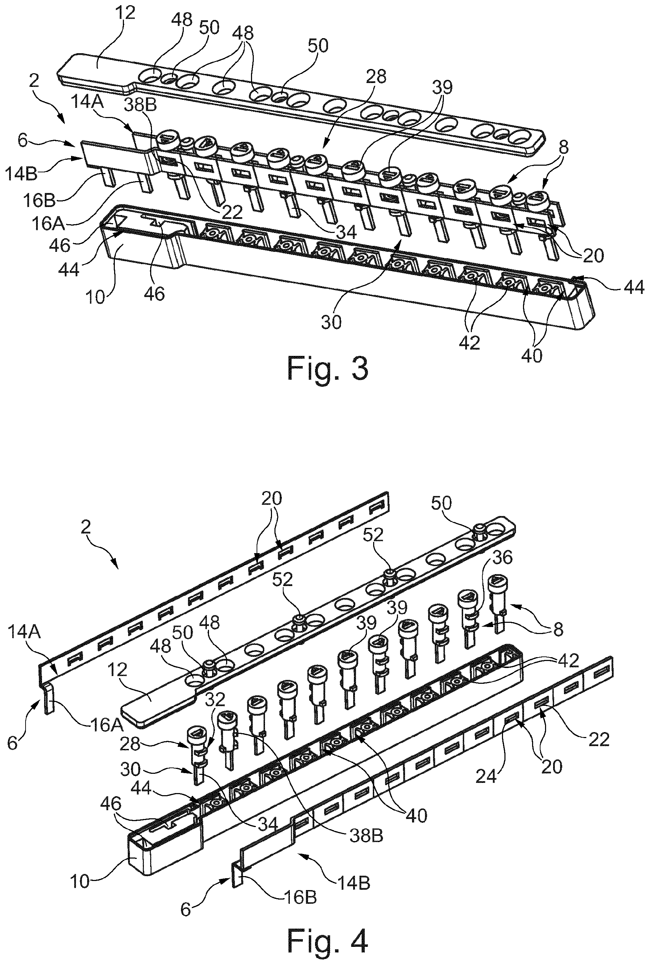

Comme illustré sur les figures 3, 4 et 5, le dispositif de distribution électrique 2 comprend un longeron 6 et au moins deux dents conductrices 8 faisant saillie depuis le longeron 6. Dans l'exemple de réalisation particulier des figures 1 à 5, le dispositif de distribution 2 comprend onze dents conductrices 8. De préférence, le dispositif de distribution 2 comprend en outre un socle de protection 10. De préférence encore, le dispositif de distribution 2 comprend en outre un capot de protection 12.

Le longeron 6 est fait d'un matériau conducteur électrique, par exemple du cuivre. Le longeron 6 est apte à être relié à au moins une source d'alimentation en courant électrique 4A, comme illustré sur les figures 1 et 2. Dans l'exemple de réalisation particulier des figures 1 et 2, la source d'alimentation en courant électrique 4A est un des appareils électriques 4, en l'occurrence l'appareil électrique agencé en tête de rangée. Ainsi, dans cet exemple de réalisation particulier, les douze appareils électriques 4 se répartissent entre un appareil de tête de rangée 4A, et onze autres appareils 4B. L'appareil de tête de rangée 4A est typiquement un appareil de mesure de courant. Les onze autres appareils 4B sont typiquement des appareils électriques de protection de type disjoncteurs. L'appareil de tête de rangée 4A, qui forme une source indirecte d'alimentation en courant électrique, est lui-même relié à une phase d'un réseau électrique. En outre, les appareils électriques 4A, 4B sont de préférence reliés entre eux via un autre dispositif de distribution électrique, non représenté sur les figures mais se présentant sous la forme d'un peigne ou d'une barre de distribution, et relié à une borne de neutre du réseau électrique.

Dans l'exemple de réalisation particulier des figures 1 à 5, le longeron 6 comporte un premier barreau conducteur 14A et un deuxième barreau conducteur 14B. Les premier et deuxième barreaux conducteurs 14A, 14B s'étendent sensiblement parallèlement. Dans l'exemple de réalisation particulier des figures 1 à 5, le premier barreau conducteur 14A est muni d'une languette conductrice 16A apte à être insérée dans une borne d'entrée 18A d'un appareil électrique 4A, typiquement un appareil de mesure de courant. Le deuxième barreau conducteur 14B est muni d'une languette conductrice 16B apte à être insérée dans une borne de sortie 18B de cet appareil électrique 4A. La borne d'entrée 18A est typiquement reliée à une phase d'un réseau électrique.

De préférence, chacun des premier et deuxième barreaux conducteurs 14A, 14B comprend au moins un élément de mise en contact électrique 20. Dans l'exemple de réalisation particulier des figures 1 à 5, chacun des premier et deuxième barreaux conducteurs 14A, 14B comprend onze éléments de mise en contact 20.

La languette conductrice 16A du premier barreau conducteur 14A est par exemple agencée à une extrémité de ce barreau 14A. De même, la languette conductrice 16B du deuxième barreau conducteur 14B est par exemple agencée à une extrémité de ce barreau 14B. De préférence, chaque languette conductrice 16A, 16B présente une forme sensiblement en « L », comme illustré sur la figure 4, afin de faciliter son insertion dans la borne d'entrée 18A ou de sortie 18B de l'appareil électrique 4A.

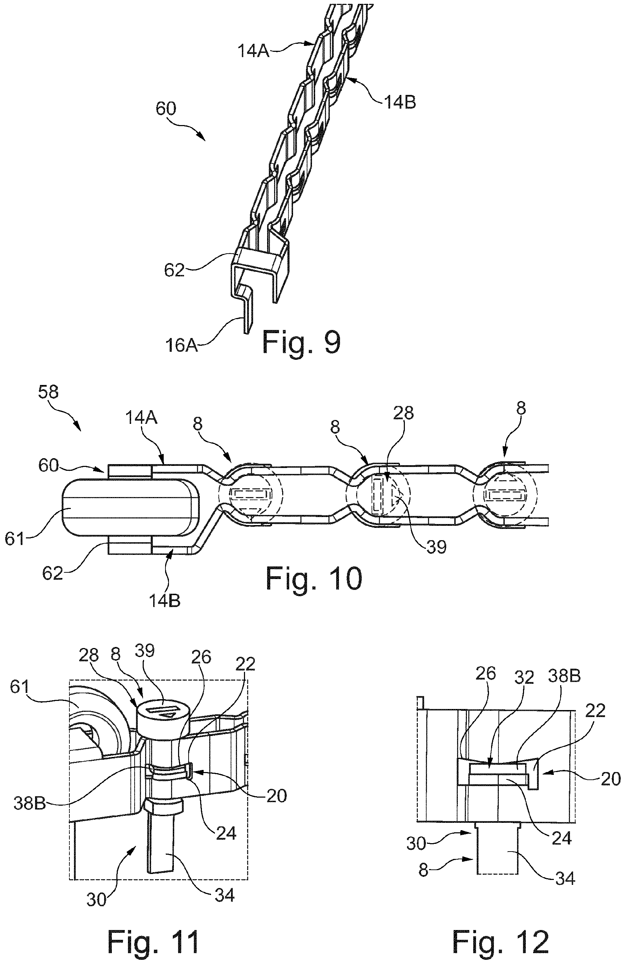

Comme illustré sur les figures 3, 4 et 12, chaque élément de mise en contact 20 est par exemple formé d'une ouverture 22 dans le barreau conducteur 14A, 14B, et d'une enclume de support 24. De préférence, l'ouverture 22 définit une pente 26 de pression de contact avec une partie d'une dent conductrice 8, comme illustré sur la figure 12 et comme cela sera décrit plus en détail par la suite. L'enclume de support 24 s'étend à l'écart de l'ouverture 22, par exemple sensiblement perpendiculairement à celle-ci, et est apte à supporter une partie d'une dent conductrice 8, comme illustré sur la figure 12.

Au moins une des dents conductrices 8 du dispositif de distribution électrique 2 est montée mobile par rapport au longeron 6, et est apte à être mise en contact avec le longeron 6 dans au moins une position de la dent. Dans l'exemple de réalisation particulier des figures 1 à 5, les onze dents conductrices 8 sont montées mobiles par rapport au longeron 6. Plus précisément, dans cet exemple de réalisation particulier, chacune des onze dents conductrices 8 est orientable par rapport au longeron 6, entre deux positions de mise en contact de la dent 8 avec le longeron 6, et une position neutre d'absence de contact. Selon cet exemple de réalisation particulier dans lequel le longeron 6 comprend deux barreaux conducteurs 14A, 14B, chacune des onze dents conductrices 8 est en effet montée pivotable entre les premier et deuxième barreaux conducteurs 14A, 14B, et est apte à être mise en contact par pivotement avec l'un ou l'autre de ces barreaux 14A, 14B. En outre, toujours selon cet exemple de réalisation particulier, chacune des onze dents conductrices 8 est amovible par rapport au longeron 6.

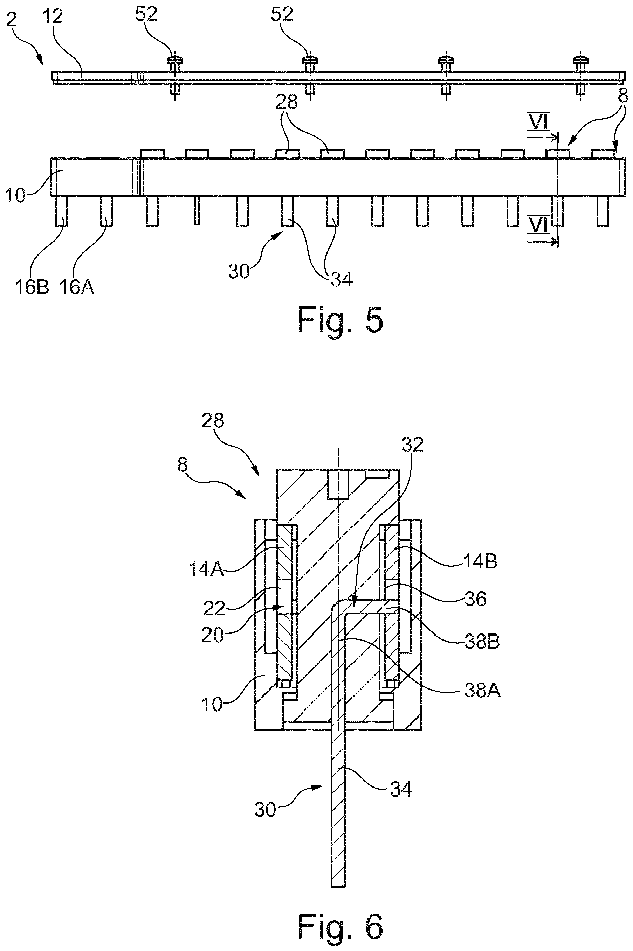

La structure d'une des dents conductrices 8 du dispositif de distribution électrique 2 selon le premier mode de réalisation va maintenant être décrite plus en détail, notamment en référence à la figure 6, la structure des autres dents conductrices 8 étant identique.

La dent conductrice 8 comporte une partie supérieure non conductrice 28 et une partie inférieure conductrice 30.

La partie supérieure non conductrice 28 est formée d'une tête de réception d'un outil, un tel outil n'étant pas représenté sur les figures pour des raisons de clarté. Dans le mode de réalisation particulier des figures 1 à 6, un tel outil est à la fois un outil destiné à faire pivoter la dent 8 entre les premier et deuxième barreaux conducteurs 14A, 14B ; et un outil apte à permettre le montage et le démontage de la dent 8 au sein du dispositif de distribution 2, lorsque la dent 8 est dans sa position neutre.

La partie inférieure conductrice 30 est faite d'un matériau conducteur électrique, par exemple du cuivre. La partie inférieure conductrice 30 comprend une première portion 32 apte à être mise en contact avec le longeron 6, et une deuxième portion 34 formant un conducteur d'alimentation.

Dans l'exemple de réalisation particulier des figures 1 à 5, la première portion 32 est apte à être mise en contact par pivotement avec l'un ou l'autre des premier et deuxième barreaux conducteurs 14A, 14B.

La deuxième portion 34 de la partie inférieure conductrice 30 est apte à être insérée dans un logement dédié d'un des appareils électriques 4, comme cela sera décrit par la suite.

Comme illustré sur les figures 4 et 6, la partie supérieure non conductrice 28 est par exemple munie d'une lumière 36 de passage de la première portion 32. Plus précisément, selon cet exemple illustratif de réalisation de la dent 8, la première portion 32 présente une forme sensiblement en « L », comme représenté sur la figure 6. Une première branche 38A de la première portion 32 s'étend au sein de la partie supérieure non conductrice 28, par exemple au sein d'un logement prévu à cet effet. Une deuxième branche 38B de la première portion 32 s'étend à l'écart de la première branche 38A, par exemple sensiblement perpendiculairement à celle-ci. La deuxième branche 38B de la première portion 32 s'étend au travers de la lumière de passage 36.

Selon cet exemple de réalisation particulier de la dent 8, illustré notamment aux figures 3 à 6, 11 et 12, chaque élément de mise en contact 20 d'un barreau conducteur 14A, 14B est destiné à mettre en contact électrique la deuxième branche 38B de la première portion 32 d'une dent 8, avec le barreau conducteur 14A, 14B correspondant. En outre, lorsque la dent 8 est mise en position de contact avec l'un des barreaux conducteurs 14A, 14B et que la deuxième portion 34 de la partie inférieure conductrice 30 de la dent est insérée dans un logement dédié d'un des appareils électriques 4, l'élément de mise en contact 20 correspondant est configuré de sorte à verrouiller la dent 8 dans cette position de contact.

Selon l'exemple de réalisation des figures 3, 4, 11 et 12, l'ouverture 22 de chaque élément de mise en contact 20 définit une pente 26 de pression de contact avec la deuxième branche 38B de la première portion 32 d'une dent 8 ; et l'enclume 24 de chaque élément de mise en contact 20 est destinée à supporter une telle deuxième branche 38B de la première portion 32 d'une dent 8. Comme illustré sur les figures 3, 11 et 12, lorsque la dent 8 est mise en position de contact avec l'un des barreaux conducteurs 14A, 14B, la deuxième branche 38B de la première portion 32 de la dent 8 s'étend ainsi au travers de l'ouverture 22 pratiquée dans l'élément de mise en contact 20 correspondant, au contact de la pente 26, et prend appui sur l'enclume de support 24 de cet élément.

Ainsi, dans l'exemple de réalisation des figures 1 à 5, chaque dent conductrice 8 est orientable par pivotement entre une position de mise en contact avec le premier barreau conducteur 14A, une position neutre d'absence de contact, et une position de mise en contact avec le deuxième barreau conducteur 14B ; ces trois positions étant visibles sur les figures 3 et 4 pour différentes dents conductrices 8. Le pivotement de chaque dent conductrice 8 peut être effectué par un utilisateur, via un outil adapté inséré dans la tête de réception 28. Lorsque qu'une dent conductrice 8 est en position de mise en contact avec le premier barreau conducteur 14A ou avec le deuxième barreau conducteur 14B, la deuxième branche 38B de la première portion 32 de cette dent 8 est insérée dans un des éléments de mise en contact 20 de ce barreau. Lorsque qu'une dent conductrice 8 est en position neutre d'absence de contact, la deuxième branche 38B de la première portion 32 de cette dent 8 s'étend sensiblement parallèlement aux premier et deuxième barreaux conducteurs 14A, 14B, entre ces barreaux, comme représenté notamment sur la figure 4. En outre, lorsqu'une dent conductrice 8 est dans cette position neutre, cette dent peut être extraite du dispositif 2 par un utilisateur, via un outil adapté inséré dans la tête de réception 28.

L'appareil de mesure de courant 4A comprend typiquement un boitier de protection et un compteur de mesure, agencé au sein du boitier, et raccordé électriquement aux bornes d'entrée 18A et de sortie 18B de l'appareil de mesure 4A. Ce compteur mesure ainsi le courant entre les bornes d'entrée 18A et de sortie 18B de l'appareil de mesure 4A. Ainsi, lorsque qu'une dent conductrice 8 est en position de mise en contact avec le premier barreau conducteur 14A, qui est relié à la borne d'entrée 18A et donc au réseau électrique, le courant est acheminé directement depuis ce réseau électrique vers la dent conductrice 8, sans traverser le compteur de mesure. A l'inverse, lorsque cette même dent conductrice 8 est en position de mise en contact avec le deuxième barreau conducteur 14B, qui est relié à la borne de sortie 18B, le courant est acheminé depuis le réseau électrique vers la dent conductrice 8, en traversant le compteur de mesure. Par conséquent, par pivotement des différentes dents conductrices 8 entre leurs deux positions de mise en contact, l'utilisateur peut avantageusement sélectionner les circuits électriques aval, correspondant aux appareils électriques 4, dont il souhaite mesurer le courant consommé, et ce sans cesser d'alimenter en courant les autres circuits électriques.

On conçoit ainsi que le dispositif de distribution électrique 2 selon le premier mode de réalisation de l'invention constitue un système opérationnel d'alimentation et de mesure sélectives du courant consommé par un sous-ensemble des appareils électriques 4.

Comme illustré sur les figures 1 à 4, les têtes de réception formant les parties supérieures non conductrices 28 des dents 8 comprennent avantageusement un marquage visuel 39, par exemple sous la forme d'une flèche dans l'exemple de réalisation des figures 1 à 4. Un tel marquage visuel 39 est destiné à fournir une information à l'utilisateur, quant à la position courante de la dent conductrice 8 correspondante. Typiquement, dans l'exemple de réalisation des figures 1 à 4, la flèche 39 indique la position de la deuxième branche 38B de la première portion 32 de la dent 8. Ainsi, l'utilisateur peut par exemple facilement déterminer si la dent 8 est dans une position permettant la mesure ou non, par l'appareil de mesure 4A, du courant consommé par l'appareil électrique 4 correspondant. L'utilisateur peut également facilement déterminer si la dent 8 est dans sa position neutre d'absence de contact, dans laquelle l'appareil électrique 4 correspondant n'est pas alimenté électriquement.

La deuxième portion 34 de la partie inférieure conductrice 30 présente une section transversale sensiblement rectangulaire. En variante non représentée, la deuxième portion 34 de la partie inférieure conductrice 30 présente une section transversale sensiblement circulaire ou semi-circulaire.

Le socle de protection 10 est apte à recevoir le longeron 6 et les dents conductrices 8, comme illustré sur les figures 2 et 5. Pour ce faire, le socle de protection 10 est par exemple formé d'une pièce longitudinale monobloc, par exemple en plastique. Une telle pièce définit plusieurs logements 40 de réception, de guidage et de maintien des dents conductrices 8, à savoir autant de logements 40 que le dispositif 2 comporte de dents 8. Ces logements 40 sont délimités par des plots 42, venus de matière avec la pièce monobloc, et définissant entre eux des ouvertures traversantes formant les logements 40, de telles ouvertures permettant le passage des deuxièmes portions 34 des parties inférieures conductrices 30 des dents 8. En outre, la pièce longitudinale monobloc définit également deux rainures longitudinales 44 de réception, de guidage et de maintien des barreaux conducteurs 14A, 14B, ainsi que deux orifices 46 de passage des languettes conductrices 16A, 16B.

Le capot de protection 12 est rapporté sur le dessus du socle 10 et est destiné à refermer ce dernier, typiquement par emboitement dans la pièce longitudinale monobloc formant le socle, comme illustré sur les figures 1 à 5. Le capot de protection 12 est par exemple formé d'une pièce longitudinale monobloc, par exemple en plastique. Comme illustré sur les figures 1 à 4, le capot de protection 12 est par exemple percé par un ensemble de premiers orifices 48, et par un ensemble de seconds orifices 50. Les premiers orifices 48 définissent des logements de réception, de guidage et de maintien des parties supérieures non conductrices 28 des dents 8. Lorsque le dispositif de distribution électrique 2 est assemblé, les têtes de réception d'un outil, qui forment les parties supérieures non conductrices 28 des dents 8, affleurent à une surface extérieure du capot 12 au travers des premiers orifices 48, comme illustré sur les figures 1 et 2. Les seconds orifices 50 sont des orifices de passage de vis de fixation 52, comme illustré sur les figures 4 et 5. Ces vis 52 permettent d'assurer la fixation du capot 12 sur le socle 10.

Chacun des appareils électriques 4 est muni d'au moins un bornier de connexion d'alimentation 54, comme représenté sur la figure 2. Un tel bornier de connexion 54 définit un logement de réception d'un conducteur d'une dent 8. Dans l'exemple de réalisation des figures 1 à 6 selon lequel chaque dent 8 comprend une partie inférieure conductrice 30 munie d'une deuxième portion 34 formant un conducteur d'alimentation, chaque bornier de connexion 54 d'un appareil électrique 4 est destiné à recevoir la deuxième portion 34 d'une dent 8, pour son alimentation électrique.

En variante au mode de réalisation représenté sur les figures 1 à 6, lorsque le longeron 6 comporte un premier barreau conducteur 14A et un deuxième barreau conducteur 14B et qu'au moins une dent conductrice 8 est montée pivotable entre les premier et deuxième barreaux 14A, 14B, le premier barreau 14A peut être relié à une première source d'alimentation en courant, et le deuxième barreau 14B peut être relié à une deuxième source d'alimentation en courant, distincte de la première source. L'une des première et deuxième sources d'alimentation est par exemple un réseau électrique polyphasé classique, l'autre source d'alimentation pouvant par exemple être un réseau électrique polyphasé secouru. Ceci permet à un utilisateur de pouvoir facilement sélectionner, par pivotement de la dent, une des deux sources d'alimentation électrique, pour l'alimentation de l'appareil électrique destiné à recevoir le conducteur d'alimentation de la dent.

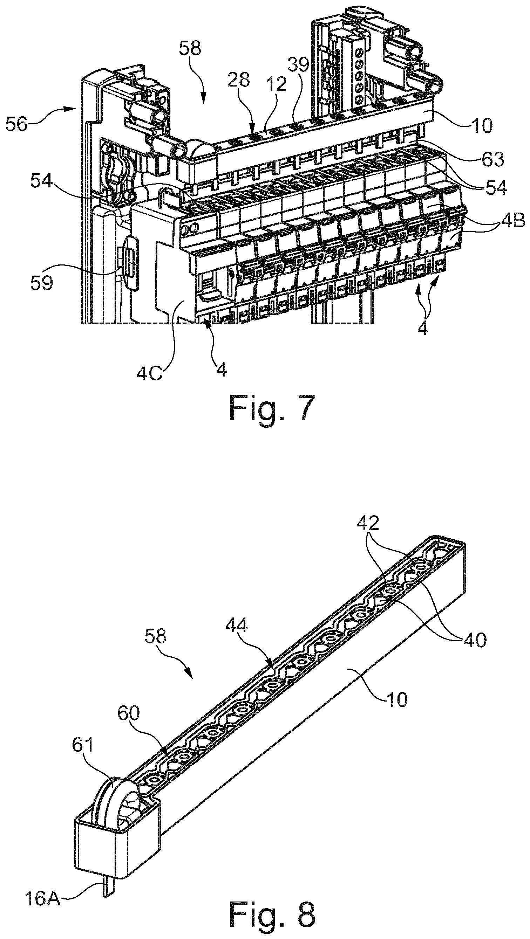

Les figures 7 à 17 illustrent un deuxième mode de réalisation de l'invention pour lequel les éléments analogues au premier mode de réalisation, décrit précédemment, sont repérés par des références identiques, et ne sont donc pas décrits à nouveau.

Sur la figure 7 est représenté en perspective un ensemble 56 comprenant un dispositif de distribution électrique 58 selon le deuxième mode de réalisation de l'invention.

Outre le dispositif 58, l'ensemble 56 comprend également plusieurs appareils électriques 4, en l'occurrence douze appareils 4 dans l'exemple de réalisation particulier illustré sur la figure 7. L'ensemble 56 est par exemple destiné à être monté sur un rail 59, au sein d'un tableau, d'un coffret ou encore d'une armoire électrique. L'ensemble 56 est destiné à être alimenté électriquement via un réseau électrique. Plus précisément, le dispositif de distribution électrique 58 est apte à être relié à au moins une source d'alimentation en courant électrique, et à alimenter les appareils 4 en courant électrique.

Dans l'exemple de réalisation particulier de la figure 7, les douze appareils électriques 4 se répartissent entre un appareil de tête de rangée 4C, et onze autres appareils 4B. Les douze appareils électriques 4B, 4C sont typiquement des appareils électriques de protection de type disjoncteurs. L'appareil de tête de rangée 4C, qui forme une source indirecte d'alimentation en courant électrique, est lui-même relié à une phase d'un réseau électrique. En outre, les appareils électriques 4B, 4C sont de préférence reliés entre eux via un autre dispositif de distribution électrique 63, se présentant par exemple sous la forme d'un peigne ou d'une barre de distribution, et relié à une borne de neutre du réseau électrique.

Selon une première variante de réalisation illustrée sur les figures 8 à 12, le dispositif de distribution électrique 58 comprend un longeron 60 et au moins deux dents conductrices 8 faisant saillie depuis le longeron 60. Dans l'exemple de réalisation particulier des figures 8 à 12, le dispositif de distribution 58 comprend onze dents conductrices 8. De préférence, le dispositif de distribution 58 comprend en outre un socle de protection 10. De préférence encore, le dispositif de distribution 58 comprend en outre un capot de protection 12. De préférence encore, le dispositif de distribution 58 comprend en outre un organe 61 de mesure d'un courant électrique circulant au sein du longeron 60.

Le longeron 60 est fait d'un matériau conducteur électrique, par exemple du cuivre. Le longeron 60 est apte à être relié à au moins une source d'alimentation en courant électrique 4C, en l'occurrence l'appareil électrique de tête de rangée, comme illustré sur la figure 7.

Comme illustré sur la figure 9, le longeron 60 comporte un premier barreau conducteur 14A, un deuxième barreau conducteur 14B, et une pièce de pontage conductrice 62 reliant les premier et deuxième barreaux conducteurs 14A, 14B.

A la différence du deuxième barreau conducteur du dispositif 2 selon le premier mode de réalisation de l'invention, tel que représenté sur les figures 1 à 6, le deuxième barreau conducteur 14B du dispositif 58 selon le deuxième mode de réalisation de l'invention ne comporte plus de languette conductrice. En variante non représentée, le premier barreau conducteur 14A du dispositif 58 ne comporte plus de languette conductrice 16A, et le deuxième barreau conducteur 14B du dispositif 58 comporte une languette conductrice.

Comme illustré sur la figure 7, la languette conductrice 16A du premier barreau conducteur 14A est apte à être insérée dans un bornier de connexion 54 de l'appareil électrique de tête de rangée 4C, pour fournir l'alimentation électrique au dispositif de distribution 58.

Chacune des onze dents conductrices 8 est montée pivotable entre les premier et deuxième barreaux conducteurs 14A, 14B, et est apte à être mise en contact par pivotement avec l'un ou l'autre de ces barreaux 14A, 14B, comme illustré sur la figure 10. En outre, chaque dent conductrice 8 est amovible par rapport au longeron 60.

Dans l'exemple de réalisation particulier illustré sur les figures 8, 10 et 11, l'organe de mesure de courant 61 est un tore de mesure. Le tore de mesure de courant 61 est agencé autour de la pièce de pontage conductrice 62, et est relié à une unité externe de mesure, non représentée sur les figures pour des raisons de clarté.

Le fonctionnement du dispositif de distribution électrique 58 selon cette première variante du deuxième mode de réalisation étant identique à celui du dispositif de distribution électrique 2 selon le premier mode de réalisation, ce dernier ne sera pas décrit en détail.

En particulier, chaque dent conductrice 8 est orientable par pivotement entre une position de mise en contact avec le premier barreau conducteur 14A, une position neutre d'absence de contact, et une position de mise en contact avec le deuxième barreau conducteur 14B, ces trois positions étant visibles sur la figure 10 pour différentes dents conductrices 8.

Lorsque qu'une dent conductrice 8 est en position de mise en contact avec le premier barreau conducteur 14A, qui est inséré dans l'appareil électrique de tête de rangée 4C via la languette conductrice 16A, le courant est acheminé directement depuis le réseau électrique vers la dent conductrice 8, sans passer par la pièce de pontage 62 et donc sans traverser le tore de mesure 61. A l'inverse, lorsque cette même dent conductrice 8 est en position de mise en contact avec le deuxième barreau conducteur 14B, le courant est acheminé depuis le réseau électrique vers la dent conductrice 8 en passant par la pièce de pontage 62, donc en traversant le tore de mesure 61.

On conçoit ainsi que le dispositif de distribution électrique 58 selon cette première variante du deuxième mode de réalisation de l'invention constitue un système opérationnel d'alimentation et de mesure sélectives du courant consommé par un sous-ensemble des appareils électriques 4.

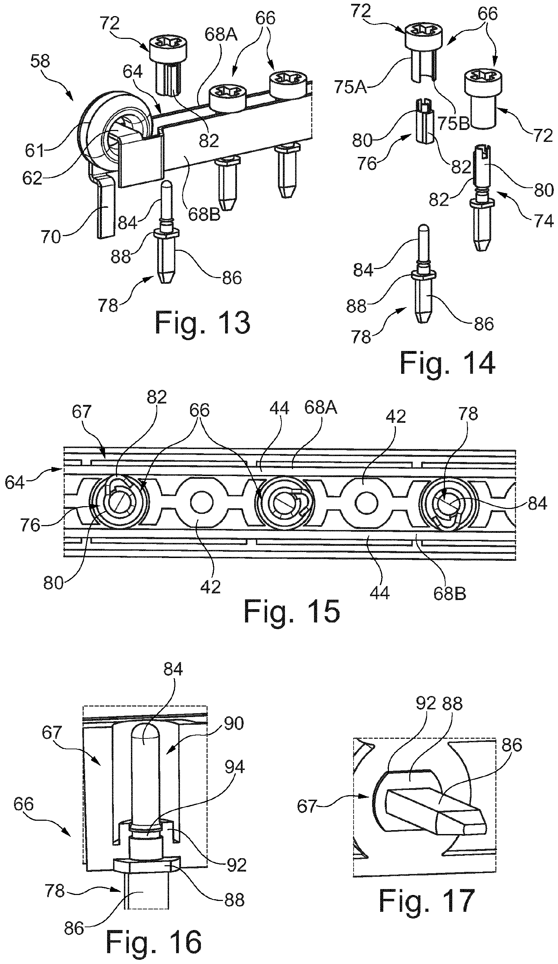

Selon une deuxième variante de réalisation illustrée sur les figures 13 à 17, le dispositif de distribution électrique 58 comprend un longeron 64 et au moins deux dents conductrices 66 faisant saillie depuis le longeron 64. Dans l'exemple de réalisation particulier des figures 13 à 17, le dispositif de distribution 58 comprend onze dents conductrices 66, bien que seulement trois dents 66 soient représentées sur les figures 13 et 15 pour des raisons de clarté. De préférence, le dispositif de distribution 58 comprend en outre un socle de protection 67. De préférence encore, le dispositif de distribution 58 comprend en outre un capot de protection 12, comme illustré sur la figure 7. De préférence encore, le dispositif de distribution 58 comprend en outre un organe 61 de mesure d'un courant électrique circulant au sein du longeron 64, typiquement un tore de mesure.

Le longeron 64 est fait d'un matériau conducteur électrique, par exemple du cuivre. Le longeron 64 est apte à être relié à au moins une source d'alimentation en courant électrique 4C, en l'occurrence l'appareil électrique de tête de rangée, comme illustré sur la figure 7.

Le longeron 64 comporte un premier barreau conducteur 68A, un deuxième barreau conducteur 68B, et une pièce de pontage conductrice 62 reliant les premier et deuxième barreaux conducteurs 68A, 68B.

Les premier et deuxième barreaux conducteurs 68A, 68B s'étendent sensiblement parallèlement. Chaque barreau conducteur 68A, 68B est une pièce pleine, de forme par exemple sensiblement rectangulaire dans l'exemple de réalisation particulier des figures 13 et 15. Dans cet exemple de réalisation, le premier barreau conducteur 68A est muni d'une languette conductrice 70 apte à être insérée dans un bornier de connexion 54 de l'appareil électrique de tête de rangée 4C, pour fournir l'alimentation électrique au dispositif de distribution 58.

La languette conductrice 70 est par exemple agencée à une extrémité du premier barreau conducteur 68A, comme illustré sur la figure 13. De préférence, la languette conductrice 70 présente une forme sensiblement en « L », afin de faciliter son insertion dans le bornier de connexion 54 de l'appareil électrique de tête de rangée 4C.

Chacune des onze dents conductrices 66 est montée mobile par rapport au longeron 64. Plus précisément, chacune des onze dents conductrices 66 est orientable par rapport au longeron 64, entre deux positions de mise en contact de la dent 66 avec le longeron 64, et une position neutre d'absence de contact. Plus précisément encore, chacune des onze dents conductrices 66 est en effet montée pivotable entre les premier et deuxième barreaux conducteurs 68A, 68B, et est apte à être mise en contact par pivotement avec l'un ou l'autre de ces barreaux 68A, 68B, comme illustré sur la figure 15.

La structure d'une des dents conductrices 66 du dispositif de distribution électrique 58 selon la deuxième variante du deuxième mode de réalisation va maintenant être décrite plus en détail, notamment en référence aux figures 13 à 17, la structure des autres dents conductrices 66 étant identique.

La dent conductrice 66 comporte une partie supérieure non conductrice 72 et une partie inférieure conductrice 74.

La partie supérieure non conductrice 72 est formée d'une tête de réception d'un outil destiné à faire pivoter la dent 66 entre les premier et deuxième barreaux conducteurs 68A, 68B, un tel outil n'étant pas représenté sur les figures pour des raisons de clarté. La tête de réception formant la partie supérieure non conductrice 72 comprend une partie creuse inférieure 75A, définissant un logement intérieur 75B, comme illustré sur la figure 14.

La partie inférieure conductrice 74 est faite d'un matériau conducteur électrique, par exemple du cuivre. La partie inférieure conductrice 74 comprend une première portion 76 apte à être mise en contact avec le longeron 60, et une deuxième portion 78 formant un conducteur d'alimentation.

La première portion 76 est apte à être mise en contact par pivotement avec l'un ou l'autre des premier et deuxième barreaux conducteurs 68A, 68B. La première portion 76 est formée d'une pièce comportant un créneau d'entrainement en rotation 80, et une alvéole 82 de mise en contact électrique avec l'un ou l'autre des premier et deuxième barreaux conducteurs 68A, 68B.

Le créneau d'entrainement en rotation 80 est reçu au sein du logement intérieur 75B défini par la partie creuse inférieure 75A de la tête de réception 72, et est ainsi solidarisé à la tête de réception 72.

L'alvéole de mise en contact électrique 82 est venue de matière avec le créneau d'entrainement en rotation 80. L'alvéole de mise en contact 82 forme un appendice conducteur, apte à être mis en contact direct avec une paroi interne d'un des premier et deuxième barreaux conducteurs 68A, 68B, par pivotement de la dent 66 correspondante, comme illustré sur la figure 15.

La deuxième portion 78 de la partie inférieure conductrice 74 est apte à être insérée dans le logement de réception d'un bornier de connexion 54 d'un des appareils électriques 4. La deuxième portion 78 est en contact avec le créneau d'entrainement en rotation 80. Plus précisément, dans l'exemple de réalisation des figures 13 à 17, le créneau d'entrainement en rotation 80 est une pièce creuse, et la deuxième portion 78 est insérée en partie au sein d'un logement intérieur aménagé dans cette pièce creuse.

Comme illustré sur les figures 14 et 16, la deuxième portion 78 est par exemple formée d'une pièce comprenant une tige supérieure 84, et une broche inférieure 86, séparée de la tige supérieure 84 par une collerette 88. La tige supérieure 84 est insérée au sein du logement intérieur aménagé dans le créneau d'entrainement en rotation 80, comme illustré sur la figure 15, et la broche inférieure 86 est destinée à être insérée dans le logement de réception d'un bornier de connexion 54 d'un des appareils électriques 4.

Le socle de protection 67 est apte à recevoir le longeron 64 et les dents conductrices 66, comme illustré sur les figures 15 à 17. Pour ce faire, le socle de protection 67 est par exemple formé d'une pièce longitudinale monobloc, par exemple en plastique. Une telle pièce définit plusieurs logements 90 de réception, de maintien et de guidage des dents conductrices 66, à savoir autant de logements 90 que le dispositif 58 comporte de dents 66. Ces logements 90 sont délimités par des plots 42, venus de matière avec la pièce monobloc, et définissant entre eux des ouvertures traversantes formant les logements 90. En outre, la pièce longitudinale monobloc définit également deux rainures longitudinales 44 de réception, de guidage et de maintien des barreaux conducteurs 68A, 68B, ainsi qu'un orifice de passage de la languette conductrice 70, non représentée sur les figures pour des raisons de clarté.

Chaque ouverture formant un logement 90 présente une forme telle que la tige supérieure 84 de la deuxième portion 78 de la partie inférieure conductrice 74 d'une dent 66 est maintenue en position au sein du logement 90, et que la collerette 88 de la dent 66 est bloquée en butée contre une paroi extérieure du socle 67, comme illustré sur les figures 16 et 17. Plus précisément, dans l'exemple de réalisation particulier des figures 16 et 17, la pièce monobloc formant le socle 67 présente, pour chaque logement de réception, de maintien et de guidage 90, une nervure annulaire 92 débouchant d'une part dans le logement 90 et d'autre part à l'extérieur du socle 67, du côté de la broche inférieure 86 de la dent 66. Chaque nervure annulaire 92 est déformable élastiquement de sorte à pouvoir recevoir la tige supérieure 84 d'une dent 66 par insertion, et à pouvoir exercer, sur une gorge 94 ménagée à la base de cette tige 84, une pression élastique de maintien en position.

Les dimensions de la nervure annulaire 92 sont telles que la collerette 88 de la dent 66 ne peut être insérée dans la nervure 92, et vient donc prendre appui en butée contre une paroi extérieure de la nervure 92, comme illustré sur la figure 16.

Par conséquent, la broche inférieure 86 de la deuxième portion 78 de la partie inférieure conductrice 74 de la dent 66 s'étend à l'extérieur du socle de protection 67, et la partie inférieure conductrice 74 de la dent 66 est maintenue fermement bloquée en position au sein du socle 67.

En fonctionnement, la partie supérieure non conductrice 72 et la première portion 76 de la partie inférieure conductrice 74 de chaque dent 66 sont orientables par pivotement entre une position de mise en contact avec le premier barreau conducteur 68A, une position neutre d'absence de contact, et une position de mise en contact avec le deuxième barreau conducteur 68B, ces trois positions étant visibles sur la figure 15 pour différentes dents conductrices 66. La deuxième portion 78 de la partie inférieure conductrice 74 de chaque dent 66 est inamovible car maintenue bloquée en position au sein du socle 67.

Lorsque qu'une dent conductrice 66 est en position de mise en contact avec le premier barreau conducteur 68A, qui est inséré dans l'appareil électrique de tête de rangée 4C via la languette conductrice 70, le courant est acheminé directement depuis le réseau électrique vers la dent conductrice 66, sans passer par la pièce de pontage 62 et donc sans traverser le tore de mesure 61. A l'inverse, lorsque cette même dent conductrice 66 est en position de mise en contact avec le deuxième barreau conducteur 68B, le courant est acheminé depuis le réseau électrique vers la dent conductrice 66 en passant par la pièce de pontage 62, donc en traversant le tore de mesure 61.

On conçoit ainsi que le dispositif de distribution électrique 58 selon cette deuxième variante du deuxième mode de réalisation de l'invention constitue un système opérationnel d'alimentation et de mesure sélectives du courant consommé par un sous-ensemble des appareils électriques 4.

L'invention est décrite dans ce qui précède à titre d'exemple. Il est entendu que la personne de l'art est à même de réaliser différentes variantes de réalisation de l'invention, en associant par exemple les différentes caractéristiques ci-dessus prises seules ou en combinaison, sans pour autant sortir du cadre de l'invention.

## Revendications

1. Dispositif (2 ; 58) de distribution d'un courant électrique au sein d'au moins deux appareils électriques (4), par exemple modulaires, fixés de manière accolée sur un organe de fixation de type rail (59) permettant leur disposition en rangée, lesdits appareils électriques (4) présentant chacun au moins un bornier de connexion d'alimentation (54) définissant un logement de réception d'un conducteur d'alimentation, le dispositif de distribution (2 ; 58) comprenant :
• un longeron (6 ; 60 ; 64) fait d'un matériau conducteur électrique, et apte à être relié à au moins une source d'alimentation en courant électrique (4A ; 4C) ;
• au moins deux dents conductrices (8 ; 66) faisant saillies depuis le longeron (6 ; 60 ; 64), chaque dent conductrice (8 ; 66) comprenant une portion (34 ; 78) formant un conducteur d'alimentation, ladite portion (34 ; 78) étant apte à être reçue au sein d'un desdits logements de réception ;
dans lequel au moins une des dents conductrices (8 ; 66) est montée mobile par rapport au longeron (6 ; 60 ; 64), et est apte à être mise en contact avec le longeron (6 ; 60 ; 64) dans au moins une position de la dent.

2. Dispositif de distribution (2 ; 58) selon la revendication 1, dans lequel au moins une des dents conductrices (8) est amovible par rapport au longeron (6 ; 60).

3. Dispositif de distribution (2 ; 58) selon la revendication 2, dans lequel ladite dent amovible (8) comporte une partie supérieure non conductrice (28) et une partie inférieure conductrice (30), la partie supérieure non conductrice (28) étant formée d'une tête de réception d'un outil de montage et de démontage, et la partie inférieure conductrice (30) comprenant une première portion (32) apte à être mise en contact avec le longeron (6 ; 60), et une deuxième portion (34) destinée à être reçue au sein d'un desdits logements de réception.

4. Dispositif de distribution (2 ; 58) selon l'une quelconque des revendications précédentes, dans lequel au moins une des dents conductrices (8 ; 66) est orientable par rapport au longeron (6 ; 60 ; 64), entre ladite position de mise en contact avec le longeron (6 ; 60 ; 64), et au moins une autre position.

5. Dispositif de distribution (2 ; 58) selon la revendication 4, dans lequel le longeron (6 ; 60 ; 64) comporte un premier barreau conducteur (14A ; 68A) et un deuxième barreau conducteur (14B ; 68B), les premier et deuxième barreaux conducteurs s'étendant sensiblement parallèlement ; et dans lequel ladite dent orientable (8 ; 66) est montée pivotable entre les premier et deuxième barreaux conducteurs (14A, 14B ; 68A, 68B), et est apte à être mise en contact par pivotement avec l'un ou l'autre des premier et deuxième barreaux conducteurs.

6. Dispositif de distribution (2 ; 58) selon la revendication 5, dans lequel ladite dent orientable (8 ; 66) comporte une partie supérieure non conductrice (28 ; 72) et une partie inférieure conductrice (30 ; 74), la partie supérieure non conductrice (28 ; 72) étant formée d'une tête de réception d'un outil de pivotement, et la partie inférieure conductrice (30 ; 74) comprenant une première portion (32 ; 76) apte à être mise en contact par pivotement avec l'un ou l'autre des premier et deuxième barreaux conducteurs (14A, 14B ; 68A, 68B), et une deuxième portion (34 ; 78) destinée à être reçue au sein d'un desdits logements de réception.

7. Dispositif de distribution (2 ; 58) selon la revendication 6, dans lequel la partie supérieure non conductrice (28) est munie d'une lumière (36) de passage de la première portion (32), la première portion (32) présentant une forme sensiblement en « L », une première branche (38A) de la première portion (32) s'étendant au sein de la partie supérieure non conductrice (28), une deuxième branche (38B) de la première portion (32) s'étendant à l'écart de la première branche (38A), à travers ladite lumière de passage (36) ; et dans lequel chacun des premier et deuxième barreaux conducteurs (14A, 14B) comprend au moins un élément (20) de mise en contact avec ladite deuxième branche (38B) de la première portion (32).

8. Dispositif de distribution (2 ; 58) selon la revendication 7, dans lequel l'élément de mise en contact (20) est configuré de sorte à verrouiller la dent orientable (8) en position de contact, lorsque la deuxième portion (34) de la partie inférieure conductrice (30) de la dent (8) est reçue au sein d'un des logements de réception.

9. Dispositif de distribution (2 ; 58) selon la revendication 7 ou 8, dans lequel l'élément de mise en contact (20) est formé d'une ouverture (22) dans le barreau conducteur (14A, 14B), définissant une pente (26) de pression de contact avec la deuxième branche (38B) de la première portion (32) de la dent (8), et d'une enclume (24) de support de ladite deuxième branche (38B), s'étendant à l'écart de l'ouverture (22).

10. Dispositif de distribution (2 ; 58) selon la revendication 6, dans lequel la première portion (76) de la partie inférieure conductrice (74) est formée d'une pièce comportant un créneau d'entrainement en rotation (80) et une alvéole (82) de mise en contact électrique avec l'un ou l'autre des premier et deuxième barreaux conducteurs (68A, 68B), la deuxième portion (78) de la partie inférieure conductrice (74) étant en contact avec ledit créneau d'entrainement en rotation (80) ; et dans lequel la tête de réception formant la partie supérieure non conductrice (72) comprend une partie creuse inférieure (75A) définissant un logement (75B) de réception et de solidarisation audit créneau d'entrainement en rotation (80).

11. Dispositif de distribution (2 ; 58) selon l'une des revendications 6 à 10, dans lequel la deuxième portion (34) de la partie inférieure conductrice (30) présente une section transversale sensiblement circulaire ou semi-circulaire.

12. Dispositif de distribution (2 ; 58) selon l'une des revendications 5 à 11, dans lequel le premier barreau conducteur (14A) est apte à être relié à une première source d'alimentation en courant électrique, et le deuxième barreau conducteur (14B) est apte à être relié à une deuxième source d'alimentation en courant électrique, distincte de la première source d'alimentation.

13. Dispositif de distribution (2 ; 58) selon l'une des revendications 5 à 12, dans lequel le premier barreau conducteur (14A) est muni d'une languette conductrice (16A) apte à être insérée dans une borne d'entrée (18A) d'un appareil de mesure de courant (4A), par exemple modulaire, fixé sur l'organe de fixation de type rail ; et le deuxième barreau conducteur (14B) est muni d'une languette conductrice (16B) apte à être insérée dans une borne de sortie (18B) dudit appareil de mesure de courant (4A).

14. Dispositif de distribution (2 ; 58) selon l'une des revendications 5 à 12, dans lequel le longeron (60 ; 64) comporte en outre une pièce de pontage conductrice (62), ladite pièce de pontage (62) reliant les premier et deuxième barreaux conducteurs (14A, 14B ; 68A, 68B).

15. Dispositif de distribution (2; 58) selon l'une quelconque des revendications précédentes, comprenant en outre un organe (61) de mesure d'un courant électrique circulant au sein du longeron (60 ; 64).

16. Dispositif de distribution (2; 58) selon la revendication 15 lorsqu'elle dépend de la revendication 14, dans lequel l'organe (61) de mesure d'un courant est un tore de mesure, le tore de mesure de courant étant agencé autour de la pièce de pontage conductrice (62).

17. Dispositif de distribution (2; 58) selon l'une quelconque des revendications précédentes, comprenant en outre un capot (12) et/ou un socle de protection (10 ; 67).

18. Dispositif de distribution (2 ; 58) selon la revendication 17, dans lequel le capot (12) et/ou le socle de protection (10; 67) comprend des logements (40, 48 ; 90) de réception, de guidage et de maintien des dents conductrices (8 ; 66).
